# EUROPÄISCHE PATENTSCHRIFT

(11) **EP 3 016 344 B1**
(45) Veröffentlichungstag und Bekanntmachung des Hinweises auf die Patenterteilung: **16.08.2017**
(21) Anmeldenummer: 14194277.1
(22) Anmeldetag: 21.11.2014
(51) Int. Cl.: H04L 29/06

(54) **INTELLIGENTER MEDIA-GATEWAY SWITCH FÜR TRANSPARENTES ROUTEN UND VERKETTEN VON MEDIENSTRÖMEN**
INTELLIGENT MEDIA GATEWAY SWITCH FOR TRANSPARENT ROUTING AND CONCATENATING MEDIA STREAMS
COMMUTATEUR DE PASSERELLE MÉDIA INTELLIGENT POUR ROUTAGE TRANSPARENT ET ASSOCIATION DE FLUX DE MÉDIA

(30) Priorität: 27.10.2014 EP 14190495
(43) Veröffentlichungstag der Anmeldung: 04.05.2016
(73) Patentinhaber: Deutsche Telekom AG, 53113 Bonn (DE)
(72) Erfinder: Hoffmann, Robert, 65207 Wiesbaden (DE); Copenhaguen-Bormuth, Jürgen, 68169 Mannheim (DE); Scheerbarth, Thomas, 12555 Berlin (DE); Stegmann, Joachim, 64289 Darmstadt (DE)
(74) Vertreter: 2K Patentanwälte Blasberg Kewitz & Reichel

(56) Entgegenhaltungen:
- US-A1- 2005 013 281
- US-A1- 2014 267 570

## Beschreibung

Die vorliegende Erfindung bezieht sich allgemein auf das Gebiet der Telekommunikation. Im Speziellen betrifft die Erfindung die effiziente Gestaltung von IP-basierten Kommunikationsdiensten.

Dabei werden insbesondere IP-basierte Kommunikationsdienste herausgestellt, welche mittels heute genutzten und zukünftigen Real Time Communication Technologien Telefonie- und Videokommunikation über eine beliebige Laufzeitumgebung ermöglichen.

Laufzeitumgebung steht hierbei für eine Anwendung, die bei einem Nutzer auf einem Endgerät läuft und Realtime Communication ermöglicht. Dies kann ein Webbrowser oder auch eine Endgerätespezifische Anwendung sein.

### Gebiet der Erfindung:

Die Entwicklung der Sprach- und Videokommunikation hat in den letzten Jahren einen schnellen Wandel erfahren. Standen vor 20 Jahren im Wesentlichen noch Festnetztelefone als sprachbasierte Telekommunikationsmittel im Vordergrund, sind heute überwiegend Mobiltelefone im Einsatz um miteinander zu kommunizieren.

Die fortschreitende technologische Entwicklung im Bereich der mobilen Endgeräte, inklusive der dazugehörigen Kameras, als auch die zunehmende Bereitstellung von mobilen Breitbandzugängen über 3G und LTE (Long Term Evolution) ermöglichen damit einen qualitativ akzeptierten Einsatz von Videokommunikation, d.h. die zusätzliche Übertragung von Videosignalen parallel zur Sprachkommunikation.

Insofern basiert die heutige Kommunikationslandschaft sowohl in Deutschland als auch in globalem Maßstab im Wesentlichen auf Mobilkommunikation via GSM , Videokommunikation via 3G/LTE und der herkömmlichen Festnetztelefonie, welche nach und nach den Übergang vom klassischen leitungsvermittelten ISDN-Netz hin zum paketvermittelten IP Netz findet.

Bei jeder Realtime Communication werden die eigentlichen Kommunikationsdaten in speziellen Medienströmen übertragen, die z.B. über einen separaten Signalisierungskanal ausgehandelt werden können. Ein viel verwendetes Protokoll ist das Real-Time Transport Protokoll. Hierbei soll sichergestellt sein, dass die Daten innerhalb eines definierten Zeitfensters eintreffen.

Der Medien-Pfad wird zu Beginn der Kommunikation ausgehandelt und muss bei jeder Änderung neu verhandelt werden.

### Stand der Technik:

Medien-Transformation kann von kommerziellen oder Open Source Software-Komponenten durchgeführt werden, die oft als Relays bezeichnet werden. Typischerweise werden in einer Kommunikationsplattform Signalisierungsnachrichten so manipuliert, dass ein Relay als "Mittelsmann" zwischen zwei oder mehr Teilnehmern fungiert. Dabei senden die Teilnehmer Ihren Medienstrom an das Relay, welches eine Transformation vornimmt und den veränderten Medienstrom an die anderen Teilnehmer weiterleitet. Transformation umfasst hierbei z.B. Medientranscoding, Medien-Mixing (Konferenzdienste), Protokollerweiterung (z.B. interactive Connectivity Establishment), RTP-Protokoll-Umsetzung, Ver- oder Entschlüsselung oder Multicast.

Ein Beispiel hierfür ist der Dialogic Extended Media Server oder das Open Source Projekt Sipwise NGCP rtpengine. Weitere Beispiele sind denkbar.

Zusätzlich gibt es für Kommunikations-Infrastrukturen oftmals die Anforderung, dass hier ein Lawful Interception, also eine behördliche Abhörschnittstelle implementiert sein muss, die für den Nutzer nicht erkennbar sein darf. Somit müssen in Kommunikationsnetzwerken die Medienströme immer über eine zentrale Instanz geleitet werden, an der dies stattfinden kann. Nur so kann dem Nutzer verborgen bleiben, ob ein Zugriff stattfindet oder nicht.

Für die Verhandlung von zu sendenden und zu empfangenden Medienströmen und deren Beschaffenheit (Codecs und deren Parameter, Verschlüsselung, Transportadressen) wird hauptsächlich das Session Description Protocol (SDP) verwendet. Nach RFC 3264 werden SDP-Texte zwischen den Teilnehmern in einem Offer-/Answer-Austausch kommuniziert. Dabei ergibt sich das Problem, dass in den meisten Szenarien im Vorhinein keine Information vorliegt, welche Codecs, Parameter, Verbindungsmechanismen etc. die Teilnehmer jeweils unterstützen. Dies kann im schlechtesten Fall dazu führen, dass es keinen gemeinsamen Nenner gibt und keine Kommunikation zustande kommt. Diese Problematik tritt vor allem in inhomogenen Kommunikationslandschaften auf, also wenn verschiedenste Anbieter von Kommunikationsplattformen und -clienten miteinander kommunizieren sollen. Durch neue Kommunikationstechnologien wie WebRTC, welche keine umfassende Abwärtskompatibilität zu älterer Kommunikationssoftware bieten, verstärkt sich dieses Problem zusätzlich.

Mit dem Session Description Protocol (SDP, RFC 4566) werden Eigenschaften von Multimediadatenströmen beschrieben. Es dient dazu, Kommunikationssitzungen zu verwalten, und wird beispielsweise zusammen mit SIP und H.323 in der IP-Telefonie bei der Aushandlung von Codecs, Transportprotokollen und -adressen und zur Übertragung von Metadaten eingesetzt. SDP selbst bietet keinen eigenen Aushandlungsmechanismus, sondern nur eine Beschreibung der Datenströme.

Um dem entgegenzuwirken, kann prophylaktisch immer ein Relay in die Kommunikation aufgenommen werden, das eine große Auswahl an gängigen Codecs, Verschlüsselungen und Verbindungsmechanismen bereitstellt und ggf. ein Transcoding zwischen den Medienströmen der Teilnehmer durchführt. Diese Vorgehensweise birgt aber den großen Nachteil, dass das Relay in Situationen, wo eine direkte Codec-Kompatibilität besteht, unnötigerweise in den Medienstrom eingreift. Je nach Implementierung des Relays führt dies zu unnötigem Transcoding, zusätzlichem Delay und erhöhten Kosten für verwendete Relay-Lizenzen.

Aufgrund der Funktionsweise von SDP ist es unmöglich, genau während dem SDP-Offer-/Answer-Austausch, also wenn die nötigen Informationen vorliegen, ein anderes, kostengünstigeres Relay zu wählen, weil ein Transcoding nicht notwendig ist. Dies ist darin begründet, dass SDP nur eine Transportadresse kommunizieren kann.

Eine Lösung wäre, nach der ersten SDP-Aushandlung mit dem Relay eine Neuverhandlung (Renegotiation) anzustoßen, bei der das transcodierende Relay gegen ein einfacheres (günstigeres) Relay ausgetauscht werden kann. Dies hat aber mehrere Nachteile: Zum einen muss eine Renegotiation vom verwendeten Signalisierungsprotokoll unterstützt und von den Software-Clienten korrekt implementiert sein. In der Praxis ist dies öfter nicht der Fall. Zum an-deren kann sich je nach Protokoll und Implementierung eine Unterbrechung im Medienstrom ergeben, welche zu einer schlechten User Experience führt.

Beim Media Path werden zu Beginn der Kommunikation der Pfad und die Medien-Codierung festgelegt. Falls beide Kommunikationspartner unterschiedliche Medienkomprimierungsverfahren (Codecs) benutzen, muss in den Medienpfad eine Transcodingeinheit geschaltet werden. Ein späteres Ändern der Codecs erfordert eine Neuverhandlung über den Medien-Pfad. Das hat im besonderen Einfluss in mobilen Szenarien, wo durch Auswahl der Codecs die benötigte Bandbreite optimal ausgenutzt werden soll. Durch Netzwerkübergänge können sich zudem IP-Adressen ändern. Auch hier muss der Medienstrom neu verhandelt werden.

Die im Folgenden aufgelisteten Druckschriften beziehen sich alle auf die hier beschriebene Thematik im weiteren Sinne, ohne allerdings die in der vorliegenden Erfindungsbeschreibung beschriebenen Konzepte vorwegzunehmen. Beispielhaft seien die folgenden Patentschriften aufgelistet:
Method and system for creating a virtual sip user agent by use of a webrtc enabled web browser - WO 2014060008 A1;
Method and device for transferring web real-time communication session - WO 2014075250 A1, CN103891246A;
Real time communication method, terminal device, real time communication server and system, WO 2014019497 A1, PCT/CN2013/080406, CN103580986A;
Verfahren zum übertragen von Audiodaten und Kommunikationsgerät, WO 2013171247 A1, PCT/EP2013/060000, DE102012208099A1;
Intelligentes Benachrichtigen über Anforderungen von Echtzeit-Online-Interaktion über Echtzeitkommunikation und/oder Auszeichnungsprotokolle und verwandte Verfahren, Systeme und computerlesbare Medien; DE201310110574;

Die Druckschrift US 2014/0267570 A1 offenbart einen Ansatz beim dem Datenströme zugsammengesetzt und gemischt werden auf der Basis des SDP
Die Druckschrift US 2005/0013281 offenbart ein kabelloses Kommunikationssystem bei dem das Transcoding der Sprache auf nach bestimmten Aspekten erfolgt.

### Überblick über die Erfindung:

Die vorliegende Erfindungsbeschreibung hat das Ziel, das oben beschriebenen mit geeigneten Verfahren signifikant zu verbessern.

Die vorliegende Erfindung bezieht sich in ihrer Gesamtheit auf die Art und Weise wie Medienströme intelligenter behandelt, dynamisch nach Anforderungen und transparent (ohne Neuverhandlung der Medienströme) für die Benutzer-Laufzeitumgebung verwaltet werden.

Dabei steht eine neue Komponente ("Media-Gateway Switch")/Switch im Mittelpunkt, welche in den Medienstrom eingefügt wird und sich gegenüber den beteiligten Kommunikationspartnern als Medienendpunkt ausgibt.

Die Erfindung definiert Mechanismen, Komponenten und eine Architektur, welche es ermöglicht, direkt bei der ersten SDP-Aushandlung transparent die günstigste, qualitativ hochwertigste oder nach Wunsch anders beschaffene Medienverbindung herzustellen, ohne dass eine Unterstützung durch das Signalisierungsprotokoll notwendig ist. Dabei bleiben die Vorteile der oben beschriebenen Ansätze (großes Codec- und Funktionsangebot bei der Aushandlung) erhalten, ohne deren Nachteile (ineffiziente Nutzung von Ressourcen und Lizenzen, Probleme mit Neuaushandlung) zu übernehmen.

Es wird eine neuartige, spezielle Software-Komponente definiert, der Media-Gateway Switch.

Der Media-Gateway Switch in der Cloud gibt gegenüber einem Kommunikationspartner oder -Netzwerk vor, verschiedene Codecs, Konnektivitäts- und Verschlüsselungsmechanismen zu unterstützen. Diese können konfiguriert werden. Der Kommunikationspartner kann nun aus einer Liste von Kodierungen die für ihn geeignete wählen und sich mit dem Endpunkt verbinden. Der Media-Gateway Switch kann nun verschiedenste Mediengateways, - Relays oder sonstige verarbeitende Komponenten in den Medienpfad einschleifen oder ausschleifen. Dies funktioniert für den Kommunikationspartner transparent (unbemerkt). Zusätzlich kann der Medienstrom geteilt oder mit anderen Signalen gemischt werden. Das System wird über genauso einen gearteten Endpunkt gegenüber dem oder den Kommunikationspartner/n wieder verlassen. Somit kann der Medienpfad im System frei konfigurierbar geleitet werden, oder auch während der Kommunikation neu aufgebaut werden.

Für eine medienverarbeitende Komponente kann nun entweder wieder ein so gearteter Endpunkt als Senke konfiguriert werden, oder der Eingang einer anderen Medienverarbeitenden Komponente. Hier legt die Steuerlogik den optimalen Medienpfad fest. Optimal heißt hier z.B. unter dem Gesichtspunkt der kleinsten anfallenden Kosten, der kleinsten auftretenden Verzögerung oder auch der für das Kommunikationsszenario optimalen Media Relay Function (beispielsweise einer Konferenz -Brücke).

Im Falle der Änderung des Kommunikationsszenarios kann die Steuerlogik diesen Pfad entsprechend anpassen. Ein Beispiel ist das Hinzufügen eines neuen Kommunikationspartners für eine Dreierkonferenz. Hier muss in zu einer laufenden Kommunikation eine Multipoint Control Unit in den Medienpfad eingefügt werden. Die Multipoint Control Unit ist eine Komponente, welche die Medienströme aller Teilnehmer annimmt und durch Dekodierung und erneute Enkodierung einen Summenstrom generiert, der an die Teilnehmer gesendet wird. Die Medienverarbeitenden Komponenten können aufgrund der Architektur von unterschiedlichen Herstellern oder Open Source Projekten kommen, da keine weitere Anpassung an diesen vorgenommen werden muss. Hier kann ganz gewöhnlich auf Standardprodukte zurückgegriffen werden.

Hierdurch verringert sich der Integrationsaufwand eines komplexen Systems enorm, da keine Komponenten mehr tief integriert werden müssen.

Das Einfügen neuer Komponenten kann ohne Anpassungen der Kommunikationspartner erfolgen.

Ein wesentlicher Teil der vorliegenden Erfindung gemäß den Ansprüchen ist ein Verfahren zur Steuerung einer digitalen Realtime Kommunikation. Das Verfahren verwendet
einem Media Gateway Switch, der mindestens zwei Media Gateways vorgeschaltet ist, wobei die Media Gateways die eigentliche Medienmanipulations-Funktionen übernehmen. Sowohl das Media Gateway als auch der Media Gateway Switch können herkömmliche Serversysteme mit Prozessor Arbeitsspeicher und Festplatte sein, die mit handelsüblichen Betriebssystemen wie Unix, Linux oder Windows arbeiten. Der Media Gateway Switch erfasst die Eigenschaften der Media Gateways und stellt diese als Gesamteigenschaften bereit. Die Eigenschaften können z.B. durch Abfrage der Media Gateways erlangt werden. Ferner können zusätzliche Eigenschaften wie die Auslastung der Media Gateways, vorhandene Bandbreite zu den Media Gateways, vorhandene Lizenzen, Version des Media Gateways und/oder frei Kapazität regelmäßig abgefragt werden, um den Zustand eines jeden Media Gateways zu überwachen. Die so erlangten unterschiedlichen Eigenschaften werden, wie oben beschrieben, zu einer Gesamteigenschaft aggregiert, die dem Endgerät über das SDP Protokoll vorzugsweise zur Verfügung gestellt werden, wobei diese Gesamteigenschaft sich auch dynamisch verändern kann in Abhängigkeit der Auslastung und Funktionsweise der Gateways. Auch kann die Gesamteigenschaft abhängig sein vom Endgerät bzw. dessen Nutzer, und dessen Vertrag mit dem Betreiber der Media Gateways. Sollten sich zum Beispiel ein Premium-Nutzer verbinden, so kann dieser bevorzugt werden und es können bessere Eigenschaften, insbesondere Codecs bereitgestellt werden, als anderen normalen Nutzern. Somit sind die Gesamteigenschaften keinerlei feste Menge sondern bestimmen sich dynamisch nach Parametern der Umgebung. Das Verfahren umfasst die Schritte:
- Bei einem Verbindungsaufbau durch ein Endgerät mit dem Gateway Switch, werden die Endgeräteeigenschaften erfasst und es werden die Gesamteigenschaften der Media Gateways durch den Gateway Switch an das Endgerät übertragen,
- Dann bestimmt der Media Gateway Switch anhand der ausgehandelten Eigenschaften das für das Endgerät zuständige Media Gateway;
- der Gateway Switch leite dann im Folgenden die digitalen Realtime Kommunikation an das zuständige Media Gateway weiter, welches die tatsächliche Verarbeitung der Daten basierend auf den Codecs vornimmt. In der bevorzugten Ausführungsform ist dieses Weiterleiten transparent und für das Endgerät nicht ersichtlich.

Wie der Begriff bereits sagt, übernimmt der Media Gateway Switch lediglich Schaltoperation, führt jedoch keinerlei eigene Tränskodierung der Medienströme durch. Für das Endgerät ist jedoch der Media Gateway Switch die Anlaufstelle, um die Eigenschaften bzw. Gesamteigenschaften zu erlangen.

Die Gesamteigenschaften umfassen eine oder mehrere der folgenden Informationen: unterstützte Audio-Codecs, unterstützte Video-Codecs, Bandbreitenbedarf, Verbindungsinformationen, Verschlüsselung. Weitere Parameter können dem Standard entnommen werden. Diese umfassen u.a. media, proto, SDP bwtype, nettype, addrtype, enckey, att-field (session level), att-field (both session and media level), att-field (media level only), att-field (source level), att-field (unknown level), content SDP Parameters, Semantics for the "group" SDP Attribute, "rtcp-fb" Attribute Values, "ack" and "nack" Attribute Values, "depend" SDP Attribute Values, "cs-correlation" Attribute Values, Semantics for the "ssrc-group" SDP Attribute, SDP/RTSP key management protocol identifiers, Codec Control Messages, QoS Mechanism Tokens, SDP Capability Negotiation Option Tags, SDP Capability Negotiation Configuration Parameters Registry, Timestamp Reference Clock Source Parameters, Media Clock Source Parameters (http://www.iana.org/assignments/sdp-parameters/sdp-parameters.xhtml). Prinzipiell könnte jeder der in dem obigen Dokument angegebenen Attribute zur Anwendung kommen, wenn es von einem angeschlossenen Media Gateway unterstützt wird.

Einige weitere Beispiele für aushandelbare Eigenschaften:
- Transportprofile (Transport- und Anwendungsschichtprotokolle und zugehörige Mechanismen, um Medien zu übertragen)
- Reporting-Mechanismen (zum Monitoring von Packet Loss, Jitter und anderen Größen im Zusammenhang mit der Qualität der Paketübertragung)
- Richtung und Aktivität von Medienströmen (bidirektional, unidirektional, temporär abgeschaltet)
- QoS Mechanismen
- Codec-spezifische Parameter

In einer bevorzugten Ausführungsform erfolgt die Auswahl der Media Gateways nicht nur auf der Basis der Gesamteigenschaften der Realtime Kommunikation sondern es werden weitere Parameter berücksichtigt. So werden eine oder mehrere der folgenden Parameter berücksichtigt:
Verfügbarkeit des Media Gateways, Kosten der Nutzung des Media Gateways, Auslastung des Media Gateways, physikalischer Standort des Media Gateways. Unter der Verfügbarkeit versteht man die Kapazität bzw. ob der Media Gateway aktuell betriebsfähig ist. Unter den Kosten der Nutzung sind einerseits die Lizenzgebühren zu beachten, als auch der Energiebedarf und die Betriebskosten des einzelnen Media Gateways. Der physikalische Standort ist insoweit von Bedeutung, als dass Antwortzeiten und Netzwerkkosten zu berücksichtigen sind.

Wie bereits oben ausgeführt wurde, werden in einer möglichen Ausführungsform die Gesamteigenschaften, die bei einem Verbindungsaufbau einem Endgerät bereitgestellt werden, dynamisch angepasst in Abhängigkeit von einem oder mehreren der folgenden Kriterien: Codec nach Qualitätsmaßstäben, Codec nach verfügbarer Bandbreite, Codec nach Kosten der Nutzung der Media Gateways, Codec nach Auslastung der Media Gateways, Codec nach Eigenschaft des Endgerätes, Codec nach Übertragungsmedium, Codec nach zugesicherten QoS für den Eigentümer des Endgerätes.

In einer weiteren Ausführungsform wird die digital Realtime Kommunikation durch den Media Gateway Switch auf mehrere Media Gateways oder weitere Ziele aufgeteilt. Alternativ wird die digitale Realtime Kommunikation von mehreren Media Gateways oder von weiteren Zielen gemischt wird, wobei das Aufteilen und/oder Mischen vorzugsweise transparent für das Endgerät erfolgt, d.h. das Endgerät hat keinerlei Kenntnis von den Vorgängen.

Durch die Aufteilung bzw. das Duplizieren der digitalen Realtime Kommunikation können Überwachungsmaßnahmen (Lawful Interception) durchgeführt werden, die gesetzlich gefordert sind. Hierbei würde die digitale Realtime Kommunikation als Kopie an ein weiteres Ziel weitergeleitet, das dann die Daten überprüft. Bei einem Mischen des Medienstroms können unterschiedliche Media Gateways parallel arbeiten, wobei erst der Datenstrom aufgesplittet wird, um ihn dann parallel zu verarbeiten und ihn später wieder zusammenzuführen. Das Aufteilen und Zusammenführen kann dabei durch den Media Gateway Switch vorgenommen werden. Hierdurch kann einerseits ein Performancegewinn erfolgen, andererseits ist es aber auch unmöglich dritte Informationen wie Werbung oder Zusatzinformationen einzuspeisen.

Eine weiterer Komponente der vorliegenden Erfindung ist ein System zur Steuerung einer digitalen Realtime Kommunikation, umfassend; einem Media Gateway Switch, dem mindestens zwei Media Gateways vorgeschaltet sind, wobei die Media Gateways die eigentliche Medienmanipulations-Funktionen übernehmen. Der Media Gateway Switch ist ausgebildet, um die Eigenschaften der Media Gateways zu erfassen und um diese als Gesamteigenschaften bereitzustellen. Bei einem Verbindungsaufbau durch ein Endgerät mit dem Gateway Switch ist der Media Gateway Switch ausgebildet, um die Endgeräteeigenschaften zu erfassen und/oder die Gesamteigenschaften der Media Gateways an das Endgerät zu übermitteln,
wobei der Media Gateway Switch ausgebildet ist, um anhand der ausgehandelten Eigenschaften das für das Endgerät zuständige Media Gateway zu bestimmen, um dann die digitalen Realtime Kommunikation an das zuständige Media Gateway weiterzuleiten.

Die Funktionen werden in der Regel durch eine entsprechende Server- Hardware, wie Sie oben beschrieben wurde, unter Verwendung von einer entsprechenden Softwareprogrammierung implementiert.

### Figurenbeschreibung:

im Folgenden werden die Figuren kurz beschrieben, auf die die folgende detaillierte Beschreibung Bezug nimmt.
Figur 1 zeigt das herkömmliche Prinzip des Einsatzes eines Media-Gateways, insbesondere eine herkömmliche Anbindung eines WebRTC Media Gateways zur Transcodierung von Medienströmen;
Figur 2 zeigt das dazugehörige Wirkprinzip insbesondere die Verwendung eines 2. Media Gateways zur Anpassung von Mediaströmen;
Figur 3 beschreibt das Verfahren der vorliegenden Erfindung, wobei der Einsatz eines intelligenten Media Gateway Switches zur adaptiven Aktivierung verschiedene Media Gateways gezeigt wird.

### Detaillierte Beschreibung einer Ausführungsform:

Anhand der gezeigten Figuren soll im Folgenden die Wirkungsprinzipien näher beschrieben werden.

Im Folgenden wird auf den speziellen Baustein - Intelligenter Media-Gateway Switch eingegangen.

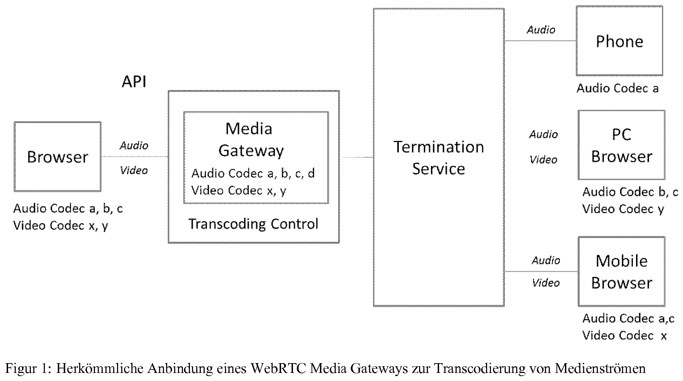

In Figur 1 wurde das herkömmliche Prinzip des Einsatzes eines Media-Gateways beschrieben.

Nachteil heutiger Lösungen wird immer nur ein Gateway verwendet, entweder ein kommerzielles oder ein auf Open Source basiertes. Die Erfindung hingegen erlaubt es nun t, mehr als einen Gateway-Typen einzusetzen.

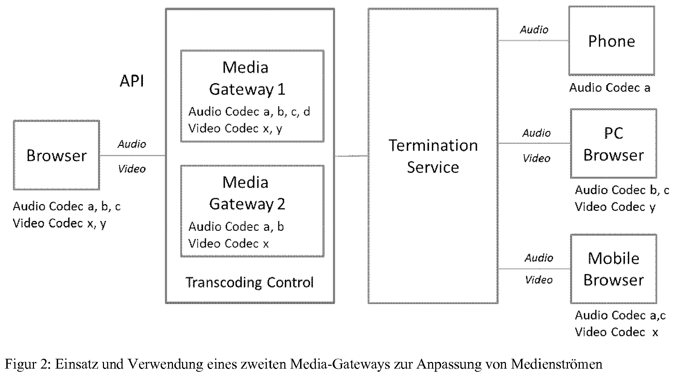

Figur 2 zeigt das dazugehörige Wirkprinzip. Die Transcoding Funktionalität kann entweder durch das Gateway 1 oder das Gateway 2 übernommen werden. Beide Media-Gateways verfügen über unterschiedliche Listen von Audio- und Video- Codecs, welche zur Transcodierung unterstützt werden. Je nach Eigenschaften der Endgeräte (Browser, Telefon u.a.) kann nun entschieden werden, welches Gateway zum Einsatz kommt.

Stellt sich bspw. heraus, dass das Open Source Gateway die erforderlichen Codecs unterstützt, kann dieses zur Transcodierung verwendet werden. Damit spart man sich den kostenpflichtigen Einsatz des kommerziellen Gateways, welches je nach Geschäftsmodell Kosten je Transcodierung verursacht.

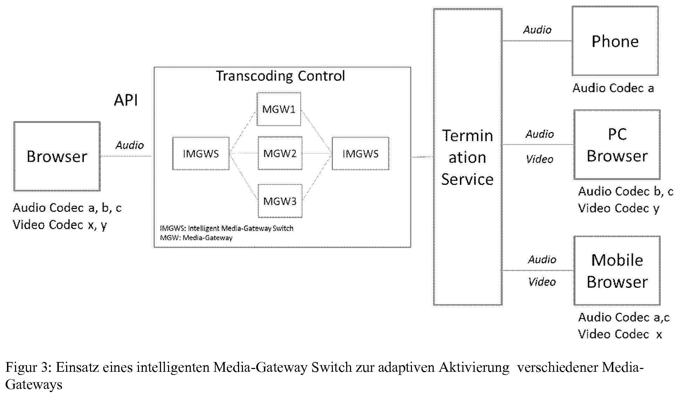

Figur 3 beschreibt das Verfahren etwas detaillierter. Um eine entsprechende Entscheidung zu treffen, welches Gateway zur Medien-Transcodierung genutzt werden soll, bedarf es einer gewissen Funktionseinheit, welche in der Lage ist, die Eigenschaften der Endgeräte zu erfassen, diese dann mit den Eigenschaften der Gateways zu vergleichen und darauf aufbauend eine Entscheidung für den Einsatz eines bestimmten Gateways zu treffen. Diese Funktionseinheit ist Gegenstand der Erfindung und wird in diesem Fall als ,Intelligent Media-Gateway Switch' bezeichnet.

Durch den Einsatz dieses ,Intelligent Media-Gateway Switch' wird es möglich, aus einer Anzahl unterschiedlicher angebundenen Media-Gateways das Passende auszuwählen. Dafür sind entsprechende Logiken etabliert, nach denen diese Entscheidung getroffen wird. Diese Entscheidungen werden in Echtzeit getroffen, d.h. bevor ein Anruf oder Videocall tatsächlich aufgebaut wird, ist diese funktionale Einheit dafür zuständig, die Eigenschaften der beteiligten Endgeräte abzufragen, zu erfassen und mit den Möglichkeiten der vorhandenen Gateways abzugleichen. Ist das bestgeeignete Gateway ausgewählt, werden dann die Medienströme entsprechend darüber verbunden.

Ein weiterer Vorteil dieser Lösung des ,Intelligent Media-Gateway Switch' besteht weiterhin darin, dass sich je nach technischer Verfügbarkeit neue Medien-Gateways integrieren oder vorhandene durch ein Update erweitern lassen.

Der Intelligenten Media-Gateway Switch steuert die Auswahl eines geeigneten Media-Gateways, welches unter anderem für die Transkodierung der Medienströme zuständig ist. Im Vergleich zu herkömmlichen Lösungen, bei dem nur ein Media-Gateway im Einsatz ist, lassen sich mit dieser Lösung mehrere Media-Gateways parallel einsetzen, welche unterschiedliche Eigenschaften haben können.

Je nach Bedarf kann so entweder ein Gateway ausgewählt werden, welches beispielsweise die Transkodieranforderungen erfüllt und kostenfrei eingesetzt werden kann (Open Source Media-Gateway) oder für den Fall das das kostenfreie Gateway die

Transkodieranforderungen nicht erfüllen kann, auf ein entsprechend kostenpflichtiges Gateway umgeschaltet werden.

Das besondere dieser Lösung ist, dass die Entscheidung jeweils zur Laufzeit der Transkodierung getroffen wird.

Entscheidend ist, dass der Media-Gateway Switch hier ein Media Relay in the Cloud simuliert, welches für alle Nutzer und Netzwerke die beste möglichen Mediencodierung zur Verfügung stellt um dann dynamisch zur Laufzeit die benötigten Transcoder oder Media Relay Functions zu Verfügung stellt. Da sowohl der Medienstrom des Nutzers als auch der des Kommunikationsnetzwerkes auf einem Relay in the Cloud terminieren, können diese Medientransformationen transparent und dynamisch stattfinden, ohne dass neue Medienströme zwischen den Kommunikationsparteien ausgehandelt werden müssen.

Als eine Media Relay Komponente kann hier auch ein Lawfull interception Modul zum Einsatz kommen.

Um die von dem Media-Gateway Switch bereitgestellten Vorteile bei der Medienaushandlung zu nutzen, muss eine speziell zugeschnittene Verarbeitungslogik (vorzugsweise SDP-Verarbeitungslogik)ausgeführt werden. Diese ist im Folgenden beschrieben:
- Der Media-Gateway Switch ist Teil einer Communication Platform und tritt gegenüber Kommunikationsnetzen und -clienten als Endpunkt für Medienströme auf.
- Der Media-Gateway Switch verwaltet alle verfügbaren Relays und kennt die jeweils unterstützten Capabilities/Eigenschaften, d.h. unterstütze Codecs, Verbindungtechniken, Verschlüsselungstechniken etc.
- Für eingehende Telefonate (oder andere Benutzersituationen, in denen Medien ausgehandelt werden), d.h. wenn ein Client einen Nutzer der Communication Platform erreichen will, oder für ausgehende Telefonate, d.h. wenn ein Nutzer der Communication Platform einen Client erreichen will, werden die bidirektionalen Medienströme an dem Media-Gateway Switch terminiert.
- Im Hintergund kann der Media-Gateway Switch die Medienströme flexibel einem bestimmten Relay oder einer anders gearteten Mediensenke zuweisen, ohne dass dies von "außen" sichtbar wäre.
- Aus der Summe von (Transcoding) Relays und deren Capabilities sowie den im SDP-Offer des Telefonats vom Anrufer angegebenen Capabilities leitet der Mediator die Super Capabilities ab. Die Super Cababilities werden in Form von SDP kommuniziert und stellen das gesamte Spektrum der unterstützten Codecs und sonstigen Funktionen dar.
- Die in den Super Capabilities enthaltenen Codecs können über eine konfigurierte oder in Echtzeit anhand bestimmter Umgebungsparameter (Systemauslastung, Nutzerlizenz etc.) bestimmte Präferenz neu geordnet werden. Diese Ordered Super Capabilities reflektieren dann z.B., dass der Empfang von G.711 Audio bevorzugt ist, weil dieser Medienstrom mit einem günstigeren Relay angenommen werden kann (und soll).
- Wenn der Kammunikationsclient eine SDP-Antwort sendet bzw. beginnt, Medien zu senden, kann der Media-Gateway Switch in Echtzeit ein passendes Relay auswählen und / oder zusätzliche Senken hinzufügen.
- Während dem Medienstreaming kann der Media-Gateway Switch weitere Senken hinzuschal oder entfernen sowie Verkettungen bilden (Pipelines).

Die obige Beschreibung hat nicht die Aufgabe die Anmeldung und das erfinderische Konzept einzuschränken. Vielmehr ist es beabsichtigt einen umfassenden Schutz zu bestimmen, der durch die Ansprüche definiert wird.

## Patentansprüche

1. Verfahren zur Steuerung einer digitalen Realtime Kommunikation, mit einem Media Gateway Switch, der mindestens zwei Media Gateways vorgeschaltet ist, wobei die Media Gateways die eigentliche Medienmanipulations-Funktionen übernehmen, der Media Gateway Switch erfasst die Eigenschaften der Media Gateways und stellt diese als Gesamteigenschaften bereit, , umfassend die Schritte:
- Abfragen der Eigenschaften von den Media Gateways und regelmäßiges Abfragen von zusätzlichen Eigenschaften wie die Auslastung der Media Gateways, vorhandene Bandbreite zu den Media Gateways, vorhandene Lizenzen, Version des Media Gateways und/oder freie Kapazität, um den Zustand eines jeden Media Gateways zu überwachen, wobei die so erlangten unterschiedlichen Eigenschaften zu einer Gesamteigenschaft aggregiert werden,
- Bei einem Verbindungsaufbau durch ein Endgerät mit dem Gateway Switch, Erfassung der Endgeräteeigenschaften und/oder Übermitteln der Gesamteigenschaften der Media Gateways, durch den Gateway Switch an das Endgerät per SDP Protokoll , wobei die Gesamteigenschaften, die bei einem Verbindungsaufbau an ein Endgerät bereitgestellt werden, dynamisch angepasst werden in Abhängigkeit von einem oder mehreren der folgenden Kriterien: Codec nach Qualitätsmaßstäben, Codec nach verfügbarer Bandbreite, Codec nach Kosten der Nutzung der Media Gateways, Codec nach Auslastung der Media Gateways, Codec nach Eigenschaft des Endgerätes, Codec nach Übertragungsmedium, Codec nach zugesicherten QoS für den Eigentümer des Endgerätes, Codec nach Richtung und Aktivität von Medienströmen;
- Bestimmen durch den Media Gateway Switch anhand der ausgehandelten Eigenschaften das für das Endgerät zuständige Media Gateway;
- Weiterleiten der digitalen Realtime Kommunikation durch den Media Gateway Switch an das zuständige Media Gateway.

2. Das Verfahren nach dem vorhergehenden Anspruch, wobei die Eigenschaften ein oder mehrere der folgenden umfassen: unterstützte Audio-Codecs, unterstützte Video-Codecs, Bandbreitenbedarf, Verbindungsinformationen, Verschlüsselung, Transportprofile, Reporting-Mechanismen, Richtung und Aktivität von Medienströmen, QoS Mechanismen, Codec-spezifische Parameter.

3. Das Verfahren nach einem oder mehreren der vorhergehenden Ansprüche, wobei bei der Auswahl der Media Gateways durch den Media Gateway Switch neben den Eigenschaften der Realtime Kommunikation ein oder mehrere weitere Parameter berücksichtigt werden:
Verfügbarkeit des Media Gateways, Kosten der Nutzung des Media Gateways, Auslastung des Media Gateways, physikalischer Standort des Media Gateways.

4. Das Verfahren nach einem oder mehreren der vorhergehenden Ansprüche, wobei die digitale Realtime Kommunikation durch den Media Gateway Switch auf mehrere Media Gateways oder weitere Ziele aufgeteilt wird und/oder wobei die digitale Realtime Kommunikation von mehreren Media Gateways oder von weiteren Zielen gemischt wird, wobei das Aufteilen und/oder Mischen vorzugsweise transparent für das Endgerät erfolgt.

5. Das Verfahren nach dem vorhergehenden Anspruch, wobei das weitere Ziel die Eigenschaft bereitstellt, die durch eine Lawfull Intercept gefordert wird.

6. Das Verfahren nach einem oder mehreren der vorhergehenden Ansprüche, **dadurch gekennzeichnet dass** die Gesamteigenschaften durch das SDP Protokoll vom Media Gateway Switch übertragen werden.

7. System zur Steuerung einer digitalen Realtime Kommunikation, umfassend;
einen Media Gateway Switch, der mindestens zwei Media Gateways vorgeschaltet ist, wobei die Media Gateways die eigentliche Medienmanipulations-Funktionen übernehmen, der Media Gateway Switch ist ausgebildet, um die Eigenschaften der Media Gateways zu erfassen und um diese als Gesamteigenschaften bereitzustellen, wobei die Eigenschaften von den Media Gateways abfragbar sind und regelmäßige zusätzlichen Eigenschaften wie die Auslastung der Media Gateways, vorhandene Bandbreite zu den Media Gateways, vorhandene Lizenzen, Version des Media Gateways und/oder freie Kapazität, um den Zustand eines jeden Media Gateways zu überwachen, abfragbar sind, wobei die so erlangten unterschiedlichen Eigenschaften zu einer Gesamteigenschaft aggregierbar sind,
bei einem Verbindungsaufbau durch ein Endgerät mit dem Gateway Switch ist der Media Gateway Switch ausgebildet, um die Endgeräteeigenschaften zu erfassen und die Gesamteigenschaften der Media Gateways an das Endgerät zu übermitteln per SDP zu übermittel, wobei die Gesamteigenschaften, die bei einem Verbindungsaufbau an ein Endgerät bereitgestellt werden, dynamisch angepasst sind in Abhängigkeit von einem oder mehreren der folgenden Kriterien: Codec nach Qualitätsmaßstäben, Codec nach verfügbarer Bandbreite, Codec nach Kosten der Nutzung der Media Gateways, Codec nach Auslastung der Media Gateways, Codec nach Eigenschaft des Endgerätes, Codec nach Übertragungsmedium, Codec nach zugesicherten QoS für den Eigentümer des Endgerätes, Codec nach Richtung und Aktivität von Medienströmen;,
wobei der Media Gateway Switch ausgebildet ist, um anhand der ausgehandelten Eigenschaften das für das Endgerät zuständige Media Gateway zu bestimmen, um dann die digitalen Realtime Kommunikation an das zuständige Media Gateway weiterzuleiten.

8. Das System nach dem vorhergehenden Systemanspruch, wobei die Eigenschaften ein oder mehrere der folgenden umfassen: unterstützte Audio-Codecs, unterstützte Video-Codecs, Bandbreitenbedarf, Verbindungsinformationen, Verschlüsselung.

9. Das System nach einem oder mehreren der vorhergehenden Systemansprüche, wobei bei der Auswahl der Media Gateways durch den Media Gateway Switch neben den Eigenschaften der Realtime Kommunikation weitere Parameter berücksichtigt werden: Verfügbarkeit des Media Gateways, Kosten der Nutzung des Media Gateways, Auslastung des Media Gateways, physikalischer Standort des Media Gateways.

10. Das System nach einem oder mehreren der vorhergehenden System Ansprüche, wobei der Media Gateway Switch ausgebildet ist, um die digital Realtime Kommunikation auf mehrere Media Gateways oder weitere Ziele aufzuteilen
und/oder
wobei die digitale Realtime Kommunikation von mehreren Media Gateways oder von weiteren Zielen mischbar ist, wobei das Aufteilen und/oder Mischen vorzugsweise transparent für das Endgerät erfolgt.

11. Das System nach dem vorhergehenden System Anspruch, wobei das weitere Ziel eine Lawfull Intercept ermöglicht.

12. Das System nach einem oder mehreren der vorhergehenden Systemansprüche, **dadurch gekennzeichnet dass** der Media Gateway Switch ausgebildet ist, um die Gesamteigenschaften durch das SDP Protokoll an das Endgerät zu übertragen.

## Claims

1. A method for controlling a digital real-time communication,
With a media gateway switch which is connected to at least two media gateways, the media gateways taking over the actual media manipulation functions, the media gateway switch capturing the properties of the media gateways and providing them as overall properties, comprising the steps:
- Querying the properties of the media gateways and periodically querying additional features, such as media gateway usage, available bandwidth to media gateways, existing licenses, media gateway version, and / or free capacity to monitor the state of each media gateway, Whereby the different properties so obtained are aggregated into a total property,
In the case of a connection setup by a terminal with the gateway switch, acquisition of the terminal properties and / or transfer of the overall properties of the media gateways, via the gateway switch to the terminal via SDP protocol, the overall properties, which are provided to a terminal during a connection setup, Dynamically adjusted according to one or more of the following criteria: codec according to quality standards, codec according to available bandwidth, codec according to costs of use of media gateways, codec after utilization of media gateways, codec by property of the terminal, codec by transmission medium, codec by Secure QoS for the owner of the terminal, codec according to direction and activity of media streams;
- determining, by means of the negotiated properties, the media gateway switch which is responsible for the terminal;
- Forward the digital real-time communication through the media gateway switch to the relevant media gateway.

2. The method according to the preceding claim, wherein the features include one or more of the following: supported audio codecs, supported video codecs, bandwidth requirements, connection information, encryption, transport profiles, reporting mechanisms, direction and activity of media streams, QoS mechanisms, Codec-specific parameters.

3. The method as claimed in one or more of the preceding claims, wherein one or more further parameters are taken into account when selecting the media gateways through the media gateway switch in addition to the properties of the real-time communication:
Availability of the media gateway, costs of using the media gateway, utilization of the media gateway, physical location of the media gateway.

4. The method as claimed in one or more of the preceding claims, wherein the digital real-time communication is divided into several media gateways or further destinations by the media gateway switch and / or the digital real-time communication is mixed by a plurality of media gateways or further destinations, Wherein the dividing and / or mixing preferably takes place transparently for the terminal.

5. The method according to the preceding claim, wherein the further objective provides the property required by a lawfull intercept.

6. The method as claimed in one or more of the preceding claims, **characterized in that** the overall properties are transmitted by the SDP protocol from the media gateway switch.

7. A system for controlling digital real-time communications, comprising;
A media gateway switch which is connected to at least two media gateways, the media gateways taking over the actual media manipulation functions, the media gateway switch being designed to capture the properties of the media gateways and to provide them as overall properties, wherein the properties of The media gateways can be interrogated and regular additional features such as the utilization of the media gateways, available bandwidth to the media gateways, existing licenses, version of the media gateway and / or free capacity to monitor the state of each media gateway can be interrogated The thus obtained different properties can be aggregated into a total property,
In the case of a connection setup by a terminal with the gateway switch, the media gateway switch is designed in order to record the terminal properties and to transmit the overall properties of the media gateways to the terminal via SDP, the overall properties which are provided to a terminal during a connection setup, Codec according to the availability of the Media Gateways, codec after utilization of the Media Gateways, codec by property of the terminal, codec by transmission medium,
Codec for secured QoS for the owner of the terminal, codec according to direction and activity of media streams,
Wherein the media gateway switch is configured to determine, based on the negotiated properties, the media gateway responsible for the terminal, and then forward the digital real-time communication to the relevant media gateway.

8. The system according to the preceding claim, wherein the features include one or more of the following: supported audio codecs, supported video codecs, bandwidth requirements, connection information, encryption.

9. The system according to one or more of the preceding system claims, wherein, in the selection of the media gateways through the media gateway switch, further parameters are taken into account in addition to the properties of the real-time communication:
Availability of the media gateway, costs of using the media gateway, utilization of the media gateway, physical location of the media gateway.

10. The system as claimed in one or more of the preceding system claims, wherein the media gateway switch is designed to divide the digital real-time communication onto a plurality of media gateways orfurther destinations
and or
Wherein the digital real-time communication is miscible by a plurality of media gateways orfurther destinations, the division and / or mixing preferably being transparent to the terminal.

11. The system according to the preceding system claim, wherein the further target enables a lawfull intercept.

12. The system according to one or more of the preceding system claims, **characterized in that** the media gateway switch is designed to transmit the overall properties to the terminal through the SDP protocol.

## Revendications

1. Un procédé de commande d'une communication numérique en temps réel ;
avec un commutateur de passerelles média qui est connecté à au mois deux passerelles media, les passerelles média prenant la suite des fonctions de manipulations de média actuelles, le commutateur de passerelles média obtenant les propriétés des passerelles média et leur fournissant en tant que propriétés globales, comprenant les étapes :
- sollicitant les propriétés des passerelles média et sollicitant périodiquement des caractéristiques supplémentaires, telles qu'une utilisation de passerelles média, la bande passante disponible vers les passerelles média, des droits existants, la version des passerelles de média, et/ou la capacité libre pour la surveillance de l'état de chaque passerelle de média, par lequel les différentes propriétés ainsi obtenues sont collectées en une propriété totale,
dans le cas d'un établissement de connexion par un terminal avec le commutateur de passerelle, l'acquisition des propriétés du terminal et/ou le transfert des propriétés globales des passerelles de média, via le commutateur de passerelles média vers le terminal via un protocole SDP, les propriétés globales, qui sont fournies à un terminal durant l'établissement de connexion, dynamiquement ajustées selon un ou plusieurs des critères suivants : codec suivant des normes de qualité, codec suivant la bandepassante disponible, codec suivant les coûts d'utilisation des passerelles médai, codec à la suite de l'utilisation des passerelles média, codec selon la propriété du terminal, codec selon le milieu de transmission, codec selon la qualité de service Qos Sécurisée pour le propriétaire du terminal, codec selon la direction et l'activité des flux médias ;
- déterminer, au moyen des propriétés négociées, le commutateur de passerelle média qui prend en charge le terminal ;
- faire suivre la communication numérique en temps réelle au travers le commutateur de passerelle média vers la passerelle média appropriée.

2. Le procédé selon la revendication précédente, dans lequel les caractéristiques comportent un ou plusieurs des éléments suivants : codecs audio supportés, codecs vidéo supportés, contraintes de bande passante, information relative à la connexion, encryptage, profils de transport, mécanismes de compte-rendu, direction et activité des flux de média, mécanismes de qualité de service QoS, paramètres spécifiques de codec.

3. Le procédé tel que revendiqué dans un ou plusieurs des revendications précédentes, dans lequel un ou plusieurs paramètres supplémentaires sont pris en considération lors de la sélection des passerelles média au travers le commutateur de passerelle média , en sus des propriétés de la communication en temps réel :
disponibilité de la passerelle média, coûts d'utilisation de la passerelle média, utilisation de la passerelle média, localisation physique de la passerelle média.

4. Le procédé tel que revendiqué dans un ou plusieurs des revendications précédentes, dans lequel la communication numérique en temps réel est divisée entre plusieurs passerelles média ou des destinations supplémentaire par le commutateur de passerelles média et/ou la communication numérique en temps réel est mélangée par une pluralité de passerelles média ou des destinations supplémentaires, dans lequel la division et/ou le mélange interviennent de préférence de façon transparente pour le terminal.

5. Le procédé tel que revendiqué dans la revendication précédente, dans lequel l'objectif supplémentaire fournit la propriété requise pour une interception légale.

6. Le procédé tel que revendiqué dans un ou plusieurs des revendications précédentes, **caractérisé en ce que** les propriétés globales sont transmises par le protocole SDP depuis le commutateur de passerelles média.

7. Un système pour commander des communications en temps réel numérique, comprenant :
un commutateur de passerelles média qui est connecté à au mois deux passerelles media, les passerelles média prenant la suite des fonctions de manipulations de média actuelles, le commutateur de passerelles média étant conçu pour capturer les propriétés des passerelles média et pour leur fournir en tant que propriétés globales, dans lequel les propriétés des passerelles média peuvent être interrogées et des caractéristiques réglementaires additionnelles telles que l'utilisation des passerelles média, la bande passante disponible vers les passerelles média, des droits existants, la version des passerelles média, et/ou la capacité libre pour la surveillance de l'état de chaque passerelle média, les différentes propriétés ainsi obtenues étant collectées en une propriété totale,
dans le cas d'un établissement de connexion par un terminal avec le commutateur de passerelle, le commutateur de passerelles média est conçu pour enregistrer des propriétés du terminal et/ou pour transférer des propriétés globales des passerelles média vers le terminal via SDP, les propriétés globales, qui sont fournies à un terminal durant l'établissement de connexion selon un ou plusieurs des critères suivants : Codec suivant la disponibilité des passerelles média, codec postérieurement à l'utilisation des passerelles de média, codec par la propriété du terminal, codec par le milieu de transmission, Codec pour ue qualité de service QoS sécurisé pour le propriété du terminal, codec suivant la direction et l'activité des flux médias,
dans lequel le commutateur de passerelle média est configuré pour déterminer, sur la base des propriétés négociées, le commutateur de passerelle média responsable du terminal, et ensuite faire suivre la communication numérique en temps réel vers la passerelle média appropriée.

8. Le système selon la revendication précédente, dans lequel les caractéristiques comportent un ou plusieurs des éléments suivants : codecs audio supportés, codecs vidéo supportés, contraintes de bande passante, information relative à la connexion, encryptage.

9. Le système tel que revendiqué dans un ou plusieurs des revendications précédentes, dans lequel, lors de la sélection des passerelles média au travers du commutateur de passerelles média, des paramètres supplémentaires sont pris en considération, en sus des propriétés de la communication en temps réel :
disponibilité de la passerelle média, coûts d'utilisation de la passerelle média, utilisation de la passerelle média, localisation physique de la passerelle média.

10. Le système tel que revendiqué dans un ou plusieurs des revendications précédentes, dans lequel le commutateur de passerelle média est conçu pour diviser la communication en temps réel numérique entre plusieurs passerelles média ou des destinations supplémentaires
et/ou
dans lequel la communication en temps réel numérique est mélangée par une pluralité de passerelles média ou des destinations supplémentaires, dans lequel la division et/ou le mélange interviennent de préférence de façon transparente pour le terminal.

11. Le système tel que revendiqué dans la revendication précédente, dans lequel l'objectif supplémentaire perme une interception légale.

12. Le système tel que revendiqué dans un ou plusieurs des revendications précédentes, **caractérisé en ce que** le commutateur de passerelles média est conçu pour transmettre les propriétés globales au terminal au travers le protocole SDP.
